# EUROPÄISCHE PATENTSCHRIFT

(11) **EP 0 634 449 B1**
(45) Veröffentlichungstag und Bekanntmachung des Hinweises auf die Patenterteilung: **01.09.1999**
(21) Anmeldenummer: 94810399.9
(22) Anmeldetag: 05.07.1994
(51) Int. Cl.: C08K 5/3435, C08G 65/22, C08L 71/02

(54) **Polyether mit gehinderten Amin-Seitenketten als Stabilisatoren**
Polyether with sterically hindered amine side chains as stabilizing agents
Polyéther ayant des chaînes latérales d'amines encombrées comme stabilisants

(30) Priorität: 13.07.1993 CH 209993
(43) Veröffentlichungstag der Anmeldung: 18.01.1995
(73) Patentinhaber: Ciba Specialty Chemicals Holding Inc., 4057 Basel (CH)
(72) Erfinder: Steinmann, Alfred, Dr., CH-1724 Praroman (CH)

(56) Entgegenhaltungen:
- EP-A- 0 000 769
- EP-A- 0 058 434
- EP-A- 0 097 616
- EP-A- 0 389 419
- CHEMICAL ABSTRACTS, vol. 111, no. 11, 11. September 1989, Columbus, Ohio, US; abstract no. 97092, 'Preparation of 4-(2,3 -epoxypropoxy)-1,2,2,6,6-pentamethylpiperi dine as a light stabilizer for polymers' & CS-B-254 695 (CZECH.)
- CHEMICAL ABSTRACTS, vol. 111, no. 8, 21. August 1989, Columbus, Ohio, US; abstract no. 58966, '4-(2,3-Epoxypropoxy)- 2,2,6,6-tetramethylpiperidine and its manufacture for light stabilizers for polymers' & CS-B-254 698 (CZECH.)
- CHEMICAL ABSTRACTS, vol. 111, no. 11, 11. September 1989, Columbus, Ohio, US; abstract no. 97092, 'Preparation of 4-(2,3 -epoxypropoxy)-1,2,2,6,6-pentamethylpiperid ine as a light stabilizer for polymers' & CS-B-254 695 (CZECH.)

## Beschreibung

Die Erfindung betrifft neue Verbindungen, die durch anionische Polymerisation von Derivaten des 4-(2,3-Epoxypropyloxy)-2,2,6,6-tetramethyl-piperidin erhalten werden können, deren Verwendung als Stabilisatoren organischen Materials gegen den schädigenden Einfluß von Licht, Sauerstoff und/oder Wärme, sowie die entsprechenden stabilisierten Zusammensetzungen.

Die Herstellung einiger Verbindungen vom Typ des 2,2,6,6-Tetramethyl-4-(2,3-epoxypropoxy)-piperidin sowie ihre Verwendung als Stabilisatoren für organische Polymere wird beispielsweise durch Luston und Vass, Makromol. Chem., Macromol. Symp. 27, 231 (1989), beschrieben; Veröffentlichungen ähnlichen Inhalts sind die Referate P58966w, P97092c und P115043u in Chem. Abstr. 111 (1989).

Die Publikation EP-A-001835 lehrt die weitere Umsetzung der Epoxygruppen-haltigen Piperidine mit Dicarbonsäureanhydriden zu Polyestern.

Ein Homopolymer aus 2,2,6,6-Tetramethyl-4-(2,3-epoxypropyloxy)-piperidin, welches Tetramethylpiperidin-Gruppen in der Kette enthält, ist in EP-A-769 beschrieben.

Es besteht weiterhin Bedarf an neuen polymeren Lichtschutzmitteln mit verbesserten Gebrauchseigenschaften, welche Tetramethylpiperidin-Gruppen als Seitenketten enthalten.

Gegenstand der Erfindung sind daher zunächst Polyether der Formel I 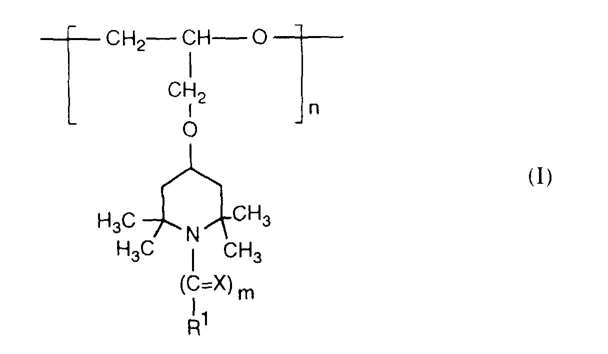 worin m 0 oder 1 ist; n eine ganze Zahl aus dem Bereich von 3 bis 100 bedeutet;
R¹ im Fall, daß m 0 oder 1 ist, C₁-C₃₆-Alkyl, oder C₇-C₃₆-Aralkyl, die jeweils unsubstituiert oder durch C₅-C₈-Cycloalkyl substituiert, im aliphatischen Teil durch C₅-C₈-Cycloalkylen oder durch Sauerstoff oder Schwefel oder -NR¹¹- unterbrochen oder im aromatischen Teil durch 1 bis 3 C₁-C₄-Alkyl- und/oder C₁-C₄-Alkoxyreste substituiert sind; C₃-C₃₆-Alkenyl; C₅-C₁₂-Cycloalkyl, welches unsubstituiert oder durch 1 bis 4 der C₁-C₄-Alkyl- und/oder C₁-C₄-Alkoxyreste substituiert ist; C₆-C₁₀-Aryl, welches unsubstituiert oder durch 1 bis 4 C₁-C₄-Alkyl- und/oder C₁-C₄-Alkoxyreste substituiert ist, bedeutet; und
R¹ im Fall, daß m 0 ist, zusätzlich Wasserstoff; C₁-C₃₆-Alkoxy oder C₇-C₃₆-Aralkoxy, die jeweils unsubstituiert oder durch C₅-C₈-Cycloalkyl substituiert, im aliphatischen Teil durch C₅-C₈-Cycloalkylen oder durch Sauerstoff oder Schwefel oder -NR¹¹- unterbrochen oder im aromatischen Teil durch 1 bis 3 C₁-C₄-Alkyl- und/oder C₁-C₄-Alkoxyreste substituiert sind; C₃-C₃₆-Alkenyloxy; C₅-C₁₂-Cycloalkoxy, welches unsubstituiert oder durch 1 bis 4 C₁-C₄-Alkyl- und/oder C₁-C₄-Alkoxyreste substituiert ist; und
C₆-C₁₀-Aryloxy, welches unsubstituiert oder durch 1 bis 4 C₁-C₄-Alkyl- und/oder C₁-C₄-Alkoxyreste substituiert ist, umfaßt;
R¹¹ C₁-C₁₈-Alkyl, C₅-C₈-Cycloalkyl, Phenyl oder C₇-C₉-Phenylalkyl; und
X ein Sauerstoff- oder Schwefelatom darstellt.

Im Fall m = 0 sind solche Reste R¹ bevorzugt, deren freie Valenz an einem Sauerstoffatom oder einem gesättigten Kohlenstoffatom lokalisiert ist.

Bei der dargestellten strukturellen Einheit der Formel I handelt es sich um konstitutionelle Repetiereinheiten (repeating units). Die erfindungsgemäßen Polyether können dabei aus Einheiten bestehen, in denen m, X und R¹ jeweils gleiche Bedeutungen haben (Homopolymere), oder aus unterschiedlichen Einheiten der Formel I, in denen zwei oder mehr der für m, X und/oder R¹ angegebenen Bedeutungen realisiert sind (Copolymere). Bevorzugt sind Homopolymere. Die konstitutionellen Repetiereinheiten können in der in Formel I dargestellten Weise oder auch andersherum eingebaut sein, so daß innerhalb der Polymerkette Strukturen vom Typ -CH₂-CH(R)-O-CH₂-CH(R)-O-, -CH₂-CH(R)-O-CH(R)-CH₂-O- und/oder -CH(R)-CH₂-O-CH₂-CH(R)-O- auftreten können; R stellt dabei jeweils die Seitenkette dar.

Die erfindungsgemäßen Polyether lassen sich vorteilhaft zur Stabilisierung organischen Materials gegen den schädigenden Einfluß von Licht, Sauerstoff und/oder Wärme einsetzen. Ein besonderer Vorteil der erfindungsgemäßen Polyether besteht in ihrer hervorragenden Löslichkeit und Substratkompatibilität.

Beispiele für die Bedeutungen von R¹ sind unter anderen die folgenden:
Verzweigtes oder unverzweigtes C₁-C₃₆-Alkyl wie Methyl, Ethyl, Propyl, Isopropyl, n-Butyl, sec-Butyl, Isobutyl, t-Butyl, 2-Ethylbutyl, n-Pentyl, Isopentyl, 1-Methylpentyl, 1,3-Dimethylbutyl, n-Hexyl, 1-Methylhexyl, n-Heptyl, Isoheptyl, 1,1,3,3-Tetramethylbutyl, 1-Methylheptyl, 3-Methylheptyl, n-Octyl, 2-Ethylhexyl, 1,1,3-Trimethylhexyl, 1,1,3,3-Tetramethylpentyl, Nonyl, Decyl, Undecyl, 1-Methylundecyl, Dodecyl, 1,1,3,3,5,5-Hexamethylhexyl, Tridecyl, Tetradecyl, Pentadecyl, Hexadecyl, Heptadecyl, Octadecyl, Eicosyl, Docosyl, Pentakosyl oder Triakosyl; beispielsweise unverzweigtes C₁-C₁₈-Alkyl, besonders C₂-C₁₈-Alkyl, C₄-C₁₈-Alkyl, vor allem C₅-C₁₀-Alkyl;
verzweigtes oder unverzweigtes C₁-C₃₆-Alkyloxy, insbesondere C₆-C₁₈-Alkyloxy, wie Hexyloxy, Heptyloxy, Octyloxy, Nonyloxy, Decyloxy, Undecyloxy, Dodecyloxy;
durch C₅-C₈-Cycloalkyl substituiertes Alkyl oder Alkyloxy wie Cyclopentylmethyl, Cyclohexylmethyl, Cycloheptylmethyl, Cyclooctylmethyl, Cyclohexylethyl, 2-Cyclohexyl-n-propyl, 3-Cyclohexyl-n-propyl, 4-Cyclohexyl-n-butyl, Cyclopentyl-methoxy, Cyclohexylmethoxy, Cycloheptylmethoxy, Cyclooctylmethoxy, Cyclohexylethoxy, 2-Cyclohexyl-n-propoxy, 3-Cyclohexyl-n-propoxy, 4-Cyclohexyl-n-butoxy;
durch C₅-C₈-Cycloalkylen oder -O- unterbrochenes Alkyl oder Alkyloxy wie beispielsweise der Formeln 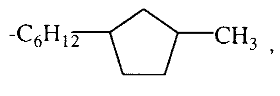 -C₂H₄-O-C₂H₄-O-C₁₂H₂₅, -(C₂H₄-O)₄-C₄H_{9,} -(C₂H₄-O)₆-C₄H₉;
C₅-C₈-Cycloalkyl oder C₅-C₈-Cycloalkyloxy, das unsubstituiert oder mit Alkyl substituiert ist, wie Cyclopentyl, Cyclopentyloxy, Cyclohexyl, Cyclohexyloxy, Cycloheptyl, Cycloheptyloxy, Cyclooctyl, Cyclooctyloxy, 2- oder 4-Methylcyclohexyloxy, Dimethylcyclohexyloxy, Trimethylcyclohexyl, t-Butylcyclohexyl, besonders Cyclohexyl und Cyclohexyloxy;
C₆-C₁₀-Aryl oder -Aryloxy, welches unsubstituiert oder durch 1 bis 3 Reste C₁-C₄-Alkyl oder C₁-C₄-Alkoxy substituiert ist, wie beispielsweise Phenyl, Phenoxy, Naphthyl, Naphthoxy, Methylphenyl, Methylphenyloxy, Di- oder Trimethylphenyl, Di- oder Trimethylphenoxy, Ethylphenyl, Ethylphenyloxy, Propyl-, insbesondere Isopropylphenyl oder -phenyloxy, Butylphenyl, insbesondere tert.-Butylphenyl oder -phenoxy, Methoxyphenyl, insbesondere 3-Methoxyphenyl, 3- oder 4-Methoxyphenyloxy, 3,5-Dimethoxyphenyl, 3,5-Dimethoxyphenoxy, Ethoxyphenyl, Ethoxyphenyloxy, Propoxyphenyl oder -phenyloxy, Butoxyphenyl oder -phenoxy;
C₇-C₃₆-Aralkyl oder C₇-C₃₆-Aralkoxy wie Benzyl, Benzyloxy, Naphthylmethyl oder -methoxy, Biphenylmethyl oder -methoxy, 2-Phenylethyl, 2-Phenylethoxy, Naphthylethyl oder -ethoxy, Biphenylethyl oder -ethoxy, 3-Phenylpropyl, 3-Phenylpropoxy, α-Methylbenzyl, α-Methylbenzyloxy, α,α-Dimethylbenzyl, α,α-Dimethylbenzyloxy, Phenylbutyl oder -butoxy, Phenylpentyl oder -pentoxy, Phenylhexyl oder -hexoxy, Phenylheptyl oder -heptoxy, Phenyloctyl oder -octoxy, Phenylnonyl oder -nonoxy, Phenyldecyl oder -decoxy, Phenylundecyl oder -undecyloxy, Phenyldodecyl oder -dodecyloxy, Phenyltridecyl oder -tridecyloxy, Phenylpentadecyl oder -pentadecyloxy, Phenylheptadecyl oder -heptadecyloxy, Phenyloctadecyl oder -octadecyloxy, besonders C₇-C₁₂-Phenylalkyl oder C₇-C₁₂-Phenylalkyloxy, vor allem Benzyl, Benzyloxy, Phenethyloxy, 3-Phenylpropyloxy, α-Methylbenzyl, α-Methylbenzyloxy, α,α-Dimethylbenzyl, α,α-Dimethylbenzyloxy;
substituiertes C₇-C₃₆-Aralkyl oder C₇-C₃₆-Aralkoxy wie 3-Methylphenyl-methyl, 3,5-Dimethylphenyl-methyl, 3-Methylphenyl-propyl, 3,5-Dimethylphenyl-propyl, 3-Butylphenyl-propyl, 3,5-Dibutylphenyl-propyl, 3-Methylphenyl-propoxy, 3,5-Dimethylphenyl-propoxy, 3-Butylphenyl-propoxy, 3,5-Dibutylphenyl-propoxy.

Aryl bedeutet einen aromatischen Kohlenwasserstoffrest wie beispielsweise Phenyl oder Naphthyl. Aralkyl bedeutet Alkyl, das durch einen aromatischen Kohlenwasserstoffrest, z.B. einen C₆-C₁₀-Kohlenwasserstoffrest, substituiert ist; Beispiele dafür sind neben anderen Benzyl oder α-Methylbenzyl.
Enthält R¹ Alkyl, welches durch -O- oder -S- oder -NR¹¹- unterbrochen ist, so handelt es sich um Alkyl mit mindestens 2, vorzugsweise mindestens 4 Kohlenstoffatomen, das bevorzugt durch 1-6 Gruppen -O- oder -S-, besonders durch 1-6 -O- unterbrochen ist; die Heteroatome binden vorzugsweise an Kohlenstoffatome und nicht an andere Heteroatome,

Strukturen des Typs -O-O- treten nicht auf. Besonders bevorzugt stellen diese Reste Polyoxyethylenketten dar, deren Enden mit C₁-C₈-Alkyl abgesättigt sind.

In den polymeren Verbindungen der Formel I liegt n vorzugsweise im Bereich von 4 bis 50, besonders im Bereich von 5 bis 30, vor allem im Bereich von 10-20. Das mittels Gelpermeationschromatographie gemessene Zahlenmittel der Molmasse Mₙ liegt allgemein zwischen 1000 und 50000 g/Mol, vorzugsweise zwischen 1000 und 10000 g/Mol, vor allem zwischen 1000 und 5000 g/Mol.

X steht bevorzugt für ein Sauerstoffatom. Bevorzugt ist m die Zahl 0.

Bevorzugt sind Polyether, worin n eine ganze Zahl aus dem Bereich von 4 bis 50 bedeutet;
R¹ im Fall, daß m 0 oder 1 ist, C₁-C₃₆-Alkyl; durch -O- unterbrochenes C₂-C₃₆-Alkyl; C₇-C₃₆-Aralkyl; im aliphatischen Teil durch -O- unterbrochenes und/oder im aromatischen Teil durch 1 bis 3 C₁-C₄-Alkyl- oder C₁-C₄-Alkoxyreste substituiertes C₇-C₃₆-Aralkyl; C₅-C₉-Cycloalkyl, welches unsubstituiert oder durch 1 bis 3 C₁-C₄-Alkyl- oder C₁-C₄-Alkoxyreste substituiert ist; Phenyl, welches unsubstituiert oder durch 1 bis 3 C₁-C₄-Alkyl- oder C₁-C₄-Alkoxyreste substituiert ist, bedeutet; und
R¹ im Fall, daß m 0 ist, zusätzlich C₁-C₃₆-Alkoxy; durch -O- unterbrochenes C₂-C₃₆-Alkoxy; C₇-C₃₆-Aralkoxy; im aliphatischen Teil durch -O- unterbrochenes und/oder im aromatischen Teil durch 1 bis 3 C₁-C₄-Alkyl- oder C₁-C₄-Alkoxyreste substituiertes C₇-C₃₆-Aralkoxy; C₅-C₉-Cycloalkoxy, welches unsubstituiert oder durch 1 bis 3 C₁-C₄-Alkyl- oder C₁-C₄-Alkoxyreste substituiert ist; und Phenyloxy, welches unsubstituiert oder durch 1 bis 3 C₁-C₄-Alkyl- oder C₁-C₄-Alkoxyreste substituiert ist, umfaßt; und X ein Sauerstoffatom darstellt.

Besonders bevorzugt sind darunter diejenigen Polyether, worin m 0 ist;
R¹ C₁-C₁₈-Alkyl; C₄-C₃₆-Alkoxy; durch -O- unterbrochenes C₂-C₁₈-Alkyl; durch -O- unterbrochenes C₄-C₃₆-Alkoxy; C₇-C₁₈-Phenylalkyl; C₇-C₁₈-Phenylalkoxy; jeweils am Phenylring durch 1 bis 3 C₁-C₄-Alkylreste substituiertes C₇-C₁₈-Phenylalkyl oder C₇-C₁₈-Phenylalkoxy; C₅-C₉-Cycloalkyl; C₅-C₉-Cycloalkoxy; Phenyl, welches unsubstituiert oder durch 1 bis 3 Reste C₁-C₄-Alkyl substituiert ist; Phenyloxy, welches unsubstituiert oder durch 1 bis 3 Reste C₁-C₄-Alkyl substituiert ist, bedeutet.

Von besonderem Interesse sind Polyether der Formel I, worin m 0 ist;
R¹ C₁-C₁₈-Alkyl; C₄-C₁₈-Alkoxy; durch -O- unterbrochenes C₂-C₁₈-Alkyl; durch -O-unterbrochenes C₄-C₃₆-Alkoxy; C₇-C₉-Phenylalkyl; C₇-C₉-Phenylalkoxy; jeweils am Phenylring durch 1 bis 3 Reste C₁-C₄-Alkyl substituiertes C₇-C₉-Phenylalkyl oder C₇-C₉-Phenylalkoxy; C₅-C₉-Cycloalkyl; C₅-C₉-Cycloalkoxy; Phenyloxy, welches unsubstituiert oder durch 1 bis 3 Reste C₁-C₄-Alkyl substituiert ist, bedeutet; insbesondere solche, worin
n eine ganze Zahl aus dem Bereich von 5 bis 30 bedeutet; und
R¹ C₁-C₁₈-Alkyl; C₄-C₁₈-Alkoxy; C₇-C₉-Phenylalkyl; oder C₅-C₉-Cycloalkoxy darstellt.

Die Herstellung der erfindungsgemäßen Polyether erfolgt zweckmäßig dadurch, daß man ein Epoxid der Formel II 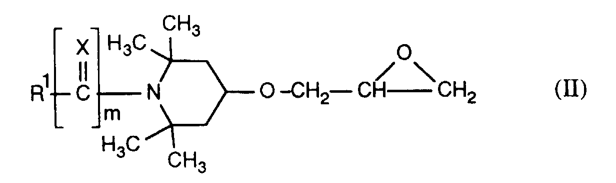 worin R¹, X und m die oben angegebenen Bedeutungen haben, oder ein Gemisch von Verbindungen der Formel II in an sich bekannter Weise anionisch polymerisiert. Gegenstand der Erfindung ist daher auch ein Polyether erhältlich durch anionische Polymerisation einer Verbindung der obigen Formel II. Die erfindungsgemäßen Polyether können vollständig aus gleichen wiederkehrenden Einheiten linear aufgebaut sein oder auch modifiziert sein.

Die Polymerisation kann beispielsweise nach einer der von K.C. Frisch und S.L. Reegen beschriebenen Methoden ausgeführt werden (Frisch/Reegen: Ring-Opening Polymerization, Marcel Dekker, New York 1969). Die Polymerisation wird in der Regel durch einen der üblichen Initiatoren der anionischen Polymerisation eingeleitet. Dazu zählen basische metallorganische Verbindungen wie Grignard-Verbindungen, beispielsweise vom Typ Cl-Mg-C₁-C₁₂-Alkyl oder Cl-Mg-C₆-C₁₂-Aryl, Alkalialkyle, beispielsweise C₁-C₆-Alkalialkyle wie Kalium-tert.-butylat, Alkalialkoholate Me-OR', worin Me beispielsweise Li, Na, K, und R' C₁-C₆-Alkyl ist, wie z.B. Natrium- oder Kaliummethanolat, Natrium- oder Kalium-tert.-butylat, Lithium- oder Natriumethanolat, Hydroxide oder Amide wie beispielsweise NaOH, KOH, Na-Amid, Lithiumamid.

Der Initiator wird zweckmäßig in einer Menge von 0,1-10 Mol-%, vorzugsweise 1-5 Mol-%, zugesetzt, bezogen auf die Menge an Epoxid der Formel II.

Der Mischung wird bevorzugt ein Kronenether wie 18-Krone-6 (18-Crown-6) oder 15-Krone-5 (15-Crown-5) zugesetzt, zweckmäßig in einer Menge von 0,1-10 Mol-%, vorzugsweise 1-5 Mol-%, bezogen auf die Menge an Epoxid der Formel II.

Die Polymerisation wird bevorzugt ohne Lösemittel durchgeführt; die Verwendung eines Lösemittels ist jedoch möglich. Die Reaktionstemperatur ist nicht kritisch; sie bewegt sich im allgemeinen im Bereich von 10 bis 200°C.

Gegebenenfalls anwesende Lösemittel müssen unter den Reaktionsbedingungen inert sein. Als Lösemittel kommen u.a. aromatische und/oder aliphatische Kohlenwasserstoffe und Ether in Betracht. Bevorzugt sind hochsiedende Lösemittel, beispielsweise solche, deren Siedetemperatur bei Normaldruck im Bereich 80-150°C liegt. Beispiele für verwendbare Lösemittel sind Benzol, Toluol, Xylol, Ethylbenzol, Isopropylbenzol, Cyclohexan, Diethylether, Dibutylether, Tetrahydrofuran oder Dioxan.

Die Polymerisation wird zweckmäßig unter Ausschluß von Sauerstoff durchgeführt, beispielsweise unter Argon oder unter Stickstoff, sowie unter Ausschluß von Wasser.

Nach vollständiger Polymerisation kann die Aufarbeitung nach gängigen Methoden erfolgen; zweckmäßig wird die Mischung zunächst mit einem geeigneten Lösemittel, beispielsweise Tetrahydrofuran, verdünnt. Die Lösung kann durch Filtration, gegebenenfalls nach Dispergieren von Aktivkohle, gereinigt werden. Aus der Lösung läßt sich das Polymer mit Hilfe eines weiteren Lösemittels geeigneter Polarität, beispielsweise Acetonitril, ausfällen; dies kann durch Eintragen der Polymerlösung in eine größere Menge des Fällungsmittels geschehen. Die Reinigung durch Fällung kann bei Bedarf mehrfach wiederholt werden.

Von den gewählten Polymerisations- und Aufarbeitungsbedingungen hängt ab, welche Endgruppen die erfindungsgemäßen Polyether der Formel I aufweisen. Die terminalen Kohlenstoffatome der Polyetherkette können beispielsweise durch -H oder -OH oder einen Rest der als Initiator verwendeten Verbindung abgesättigt sein. Wird als Initiator beispielsweise eines der oben beschriebenen Alkoholate R'O- eingesetzt und im Anschluß an die Polymerisation mit einem protischen Lösemittel aufgearbeitet, können häufig die Endgruppen -OR' und -OH an den terminalen Kohlenstoffatomen auftreten.

Prinzipiell ist die Art der Endgruppe für die Wirkung der erfindungsgemäßen Polyether als Stabilisator jedoch von untergeordneter Bedeutung.

Ein Verfahren zur Herstellung einer Verbindung der Formel II geht von einer Piperidinverbindung der Formel IIa 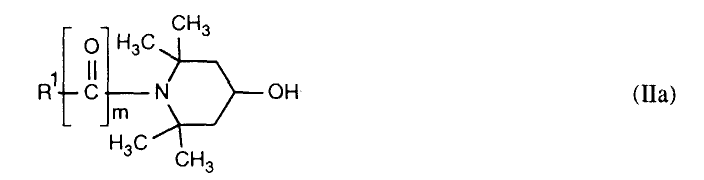 aus. Piperidinverbindungen dieser Art sind bekannt und zum Teil kommerziell erhältlich.

Zur Herstellung einer Verbindung der Formel II wird die Piperidinverbindung der Formel IIa zweckmäßig mit Epichlorhydrin umgesetzt.

Die Herstellung des Epoxides der Formel II kann entsprechend oder in Analogie zu einer der Methoden erfolgen, die in der EP-A-001835 oder bei Luston und Vass, Makromol. Chem., Macromol. Symp. 27, 231 (1989), beschrieben sind. Zweckmäßig wird die Piperidinverbindung der Formel IIa in Gegenwart starker Basen, beispielsweise wässriger konzentrierter Alkalihydroxidlösung, und eines organischen Lösemittels langsam mit einem Überschuß Epichlorhydrin versetzt.

Vorteilhaft wird die Base in ca. 2-20-fachem molarem Überschuß bezogen auf die Verbindung der Formel IIa eingesetzt; beispielsweise werden 3-15 Mol, bevorzugt 4-12 Mol Natrium- oder Kaliumhydroxid als 50-% wässrige Lösung pro Mol Piperidinverbindung verwendet. Die Menge des organischen Lösemittels wird zweckmäßig so bemessen, daß die Verbindung der Formel IIa vollständig gelöst wird; als Lösemittel eignen sich beispielsweise wenig bis unpolare Lösemittel wie Kohlenwasserstoffe oder Ether; bevorzugt ist Toluol.

Auf ein Äquivalent der Piperidinverbindung der Formel IIa können beispielsweise 1-4, vorzugsweise 1,2-3, vor allem 1,5-2,5 Äquivalente Epichlorhydrin eingesetzt werden. Darüberhinaus können der Mischung vorteilhaft 1-30 Mol-%, bevorzugt 5-25 Mol-%, eines tert. Aminsalzes, beispielsweise eines Tetraalkylammoniumhalogenids wie Tetramethylammoniumchlorid oder Tetrabutylammoniumbromid, oder eines Phosphoniumsalzes, beispielsweise eines quaternären Phosphoniumhalogenids wie Ethyltriphenylphosphoniumbromid, als Katalysator zugesetzt werden.

Die Temperatur beträgt während der Reaktion zweckmäßig 0-100°C, vorzugsweise 20-80°C, vor allem 30-70°C.

Die Reaktion wird vorzugsweise unter Schutzgas, z.B. Stickstoff oder Argon, durchgeführt; die Reaktionsmischung wird zweckmäßig gerührt.

Nach vollständiger Reaktion kann die Aufarbeitung nach gängigen Methoden erfolgen; zweckmäßig wird die Mischung zunächst mit Wasser verdünnt, beispielsweise indem das Reaktionsgemisch in das 1-4-fache Volumen Eiswasser gegeben wird; anschließend kann die organische Phase direkt abgetrennt oder extrahiert werden, zur Extraktion eignet sich z.B. Essigester. Das Produkt kann nach Trocknen der organischen Phase durch Entfernen des Lösemittels isoliert werden. Möglich sind auch das Einschalten weiterer Reinigungsschritte wie Dispergieren von Aktivkohle, Filtrieren oder Destillieren.

Die erfindungsgemäßen Polyether der Formel I eignen sich zum Stabilisieren von organischen Materialien gegen thermischen, oxidativen und aktinischen Abbau, beispielsweise zum Stabilisieren der folgenden organischen Polymere:
1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE), verzweigtes Polyethylen niederer Dichte (VLDPE).
   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe IVb, Vb, VIb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder π- oder σ-koordiniert sein können. Diese Metallkomplexe können frei oder auf Träger fixiert sein, wie beispielsweise auf aktiviertem Magnesiumchlorid, Titan(III)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen Ia, IIa und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.
4. Kohlenwasserstoffharze (z.B. C₅-C₉) inklusive hydrierte Modifikationen davon (z.B. Klebrigmacherharze) und Mischungen von Polyalkylenen und Stärke.
5. Polystyrol, Poly-(p-methylstyrol), Poly-(α-methylstyrol).
6. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
7. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.
8. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxyd oder deren Copolymere mit Bisglycidylethern.
13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
17. Polyharnstoffe, Polyimide, Polyamid-imide und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.
21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
22. Trocknende und nicht-trocknende Alkydharze.
23. Ungesättigte Polyesterharze, die sich von Copolyestern gsättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
24. Vernetzbare Acrylharze, die sich von substituierten Acrylsäureestern ableiten, wie z.B. von Epoxyacrylaten, Urethan-acrylaten oder Polyester-acrylaten.
25. Alkydharze, Polyesterharze und Acrylatharze, die mit Melaminharzen, Harnstoffharzen, Polyisocyanaten oder Epoxidharzen vernetzt sind.
26. Vernetzte Epoxidharze, die sich von Polyepoxiden ableiten, z.B. von Bis-glycidylethern oder von cycloaliphatischen Diepoxiden.
27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
28. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

Weitere Gegenstände der Erfindung sind daher Zusammensetzungen enthaltend (a) ein gegen Schädigung durch Licht, Sauerstoff und/oder Wärme empfindliches organisches Material, insbesondere ein organisches Polymer, und (b) als Stabilisator einen Polyether der Formel I, sowie die Verwendung der genannten Polyether der Formel I zum Stabilisieren von organischem Material, insbesondere organischen Polymeren, gegen Schädigung durch Licht, Sauerstoff und/oder Wärme.

Die Erfindung umfaßt ebenfalls ein Verfahren zum Stabilisieren organischen Materials, insbesondere organischer Polymere, gegen Schädigung durch Licht, Sauerstoff und/oder Wärme, dadurch gekennzeichnet, daß man den Polymeren als Stabilisator einen Polyether der Formel I beimischt.

Von besonderem Interesse ist die Verwendung der erfindungsgemäßen Polyether als Stabilisatoren für synthetische organische Polymere, insbesondere Thermoplaste, beispielsweise Polyolefine.

Vorzugsweise handelt es sich bei den zu schützenden organischen Materialien um natürliche, halbsynthetische oder bevorzugt synthetische organische Polymere. Besonders bevorzugt sind synthetische organische Polymere oder Gemische solcher Polymere, insbesondere thermoplastische Polymere wie Polyolefine, vor allem Polyethylen und Polypropylen (PP). Ebenfalls besonders bevorzugte organische Materialien sind photographische Materialien oder Überzugszusammensetzungen. Unter photographischen Materialien sind insbesondere die Materialien zu verstehen, die in Research Disclosure 1990, 31429 (Seiten 474-480) für die photographische Reproduktion und andere Reproduktionstechniken beschrieben sind. Im Sinne der Erfindung vorteilhaft zu stabilisierende Überzugszusammensetzungen sind beispielsweise beschrieben in Ullmann's Encyclopedia of Industrial Chemistry, 5. Ed., Vol. A18, pp. 359-464, VCH Verlagsgesellschaft, Weinheim 1991.
Zusammensetzungen, worin die zu schützende Komponente (a) ein Polyolefin, ein photographisches Material oder ein Lackbindemittel auf der Basis von Acryl-, Alkyd-, Polyurethan-, Polyester- oder Polyamidharz oder entsprechender modifizierter Harze ist, stellen daher einen besonders bevorzugten Gegenstand der Erfindung dar.

Allgemein werden die erfindungsgemäßen Polyether dem zu stabilisierenden Material in Mengen von 0,01 bis 10 %, bevorzugt 0,01 bis 5 %, insbesondere 0,01 bis 2 %, bezogen auf das Gesamtgewicht der stabilisierten Zusammensetzung, zugesetzt. Besonders bevorzugt ist der Einsatz der erfindungsgemäßen Verbindungen in Mengen von 0,05 bis 1,5 %, vor allem 0,1 bis 1,5 %.

Die Einarbeitung in die zu stabilisierenden Materialien kann beispielsweise durch Einmischen oder Aufbringen der erfindungsgemäßen Polyether und gegebenenfalls weiterer Additive nach den in der Technik üblichen Methoden erfolgen. Beispielsweise kann die Einarbeitung in die zu schützenden Polymere vor oder während der Formgebung, oder durch Aufbringen der gelösten oder dispergierten Verbindung auf das Polymere, gegebenenfalls unter nachträglichem Verdunsten des Lösungsmittels erfolgen. Im Fall von Elastomeren können diese auch als Latices stabilisiert werden. Eine weitere Möglichkeit der Einarbeitung der erfindungsgemäßen Polyether besteht in deren Zugabe vor, während oder unmittelbar nach der Polymerisation der entsprechenden Monomeren bzw. vor der Vernetzung. Die erfindungsgemäßen Polyether können dabei als solche, aber auch in encapsulierter Form (z.B in Wachsen, Ölen oder Polymeren) zugesetzt werden. Im Falle der Zugabe vor oder während der Polymerisation können die erfindungsgemäßen Polyether auch als Regulator für die Kettenlänge der Polymere (Kettenabbrecher) wirken.

Die erfindungsgemäßen Polyether können auch in Form eines Masterbatches, der diese Verbindung beispielsweise in einer Konzentration von 2,5 bis 25 Gew.-% enthält, den zu stabilisierenden Kunststoffen zugesetzt werden.

Zweckmäßig kann die Einarbeitung der erfindungsgemäßen Polymere oder Copolymere nach folgenden Methoden erfolgen:
- als Emulsion oder Dispersion (z.B. zu Latices oder Emulsionspolymeren),
- als Trockenmischung während des Vermischens von Zusatzkomponenten oder Polymermischungen,
- durch direktes Zugeben in die Verarbeitungsapparatur (z.B. Extruder, Innenmischer usw.).
- als Lösung oder Schmelze.

Erfindungsgemäße Polymerzusammensetzungen können in verschiedener Form angewendet bzw. zu verschiedenen Produkten verarbeitet werden, z.B. als (zu) Folien, Fasern, Bändchen, Formmassen, Profilen, oder als Bindemittel für Lacke, Klebstoffe oder Kitte.

Neben den erfindungsgemäßen Polymeren oder Copolymeren können die erfindungsgemäßen Zusammensetzungen zusätzlich herkömmliche Additive enthalten, wie beispielsweise die unten angegebenen.

Die herkömmlichen Additive werden zweckmäßig in Mengen von 0,1-10, beispielsweise 0,2-5 Gew.-%, bezogen auf das zu stabilisierende Polymer, eingesetzt.
1. Antioxidantien
   1.1. Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.
   1.2. Alkylthiomethylphenole, z.B. 2,4-Di-octylthiomethyl-6-tert-butylphenol, 2,4-Dioctylthiomethyl-6-methylphenol, 2,4-Di-octylthiomethyl-6-ethylphenol, 2,6-Di-dodecylthiomethyl-4-nonylphenol.
   1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.
   1.4. Tocopherole, z.B. α-Tocopherol, β-Tocopherol, γ-Tocopherol, δ-Tocopherol und Mischungen davon (Vitamin E).
   1.5. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-dimethyl-4-hydroxyphenyl)-disulfid.
   1.6. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methylphenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(5-tert-butyl-4-hydroxy-2-methylphenyl)-4-n-dodecylmercaptobutan, 1,1,5,5-Tetra-(5-tert-butyl-4-hydroxy-2-methylphenyl)-pentan.
   1.7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-dithioterephthalat, Bis-(3,5-di-tert-butyl-4-hydroxybenzyl)-sulfid, Isooctyl-3,5-di-tert-butyl-4-hydroxybenzyl-mercaptoacetat.
   1.8. Hydroxybenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Didodecylmercaptoethyl-2,2-bis-(3,5-di-tert-butyl-4-hydroxybenzyl)-malonat, Di- [4-(1,1,3,3-tetramethylbutyl)-phenyl]-2,2-bis-(3,5-di-tert-butyl-4-hydroxyhenzyl)-malonat.
   1.9. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.
   1.10. Triazinverbindungen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)-1,3,5-triazin, 2,4,6-Tris-(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.
   1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.
   1.12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
   1.13. Ester der β-(3,5-Di-tert-butyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.14. Ester der β-(5-tert-Butyl-4-hydroxy-3-methylphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.15. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.16. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.17. Amide der β-(3,5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.
2. UV-Absorber und Lichtschutzmittel
   2.1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl- 2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis-(α,α-dimethylbenzyl)-2'-hydroxyphenyl)-benzotriazol, Mischung aus 2-(3'-tert-Butyl-2'-hydroxy-5'-(2-octyloxycarbonylethyl)-phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, und 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; [R-CH₂CH₂-COO(CH₂)₃ 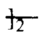 mit R = 3'-tert-Butyl-4'-hydroxy-5'-2H-benzotriazol-2-yl-phenyl.
   2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
   2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis-(4-tert-butyl-benzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
   2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
   2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   2.6. Sterisch gehinderte Amine, wie z.B. Bis-(2,2,6,6-tetramethyl-piperidyl)-sebacat, Bis-(2,2,6,6-tetramethyl-piperidyl)-succinat, Bis-(1,2,2,6,6-pentamethylpiperidyl)-sebacat, n-Butyl-3,5-di-tert-butyl-4-hydroxybenzyl-malonsäure-bis( 1,2, 2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl- 4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)äthan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion.
   2.7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'di-tert-butyl-oxanilid, 2-Ethoxy-2'-ethyl-oxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
   2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)- 1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.
3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert-butyl-4-hydroxyphenylpropionyl)-hydrazin, 3-Salicyloylamino-1,2,4-triazol, Bis-(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.
4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit-diphosphit, Bis-(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis-(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-di-benz[d,g]-1,3,2-dioxaphosphocin, Bis-(2,4-di-tert-butyl-6-methylphenyl)-methylphosphit, Bis-(2,4-di-tert-butyl-6-methylphenyl)-ethylphosphit.
5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.
6. Polyamidstabilisatoren, wie z.B. Kupfersalze in Kombination mit Jodiden und/oder Phosphorverbindungen und Salze des zweiwertigen Mangans.
7. Basische Co-Stabilisatoren, wie z.B. Melamin, Polyvinylpyrrolidon, Dicyandiamid, Tri-allylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinn-brenzcatechinat.
8. Nukleierungsmittel, wie z.B. 4-tert-Butylbenzoesäure, Adipinsäure, Diphenylessigsäure.
9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Ruß, Graphit.
10. Sonstige Zusätze, wie z.B. Weichmacher, Gleitmittel, Emulgatoren, Pigmente, Optische Aufheller, Flammschutzmittel, Antistatika, Treibmittel.
11. Benzofuranone bzw. Indolinone, wie z.B. in US-A-4 325 X63, US-A-4 338 244, US-A-5 175 312, US-A-5 216 052, US-A-5 252 643, DE-A-4 316 611, DE-A-4 316 622, DE-A-4 316 876, EP-A-0 589 839 oder EP-A-0 591 102 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]-benzofuran-2-on, 3,3'-Bis-[5,7-di-tert-butyl-3-(4-[2-hydroxyethoxy]-phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on.

Die nachfolgenden Beispiele illustrieren die Erfindung weiter. Alle Angaben in Teilen oder Prozenten, in den Beispielen ebenso wie in der übrigen Beschreibung sowie in den Patentansprüchen, beziehen sich auf das Gewicht, sofern nichts anderes angegeben ist. In den Beispielen werden die folgenden Abkürzungen verwendet:

| | |
|---|---|
| GC | Gaschromatographie; |
| GPC | Gelpermeationschromatographie; |
| THF | Tetrahydrofuran; |
| Mₙ | Zahlenmittel der Molmasse (Einheit g/Mol); |
| M_{w} | Massenmittel der Molmasse (Einheit g/Mol). |

### Herstellungsbeispiele

A) Herstellung der Monomeren
A1) 1,2,2,6,6-Pentamethyl-4-(2,3-epoxypropoxy)piperidin
In einem 2,5 l Sulfierkolben mit mechanischem Rührer, Kühler und 500 ml Tropfrichter werden unter Argonatmosphäre 300 g (7,5 Mol) Natriumhydroxyd in 300 g Wasser gelöst. Dazu gibt man 750 ml Toluol, 48,4 g (0,15 Mol) Tetrabutylammoniumbromid und 257 g (1,5 Mol) 4-Hydroxy-1,2,2,6,6-pentamethylpiperidin.
Bei 60°C werden 347 g Epichlorhydrin (3,75 Mol) in 1,5 Stunden zugetropft, anschließend wird bei gleicher Temperatur für weitere 4 Std. gerührt.
Die Reaktionslösung wird auf 3 l Eiswasser gegossen, die organische Phase abgetrennt, mit Natriumsulfat getrocknet und eingedampft.
Bei 0,05 Torr wird über eine Vigreuxkolonne destilliert und die Fraktion mit Siedepunkt 71-72°C gesammelt.
Ausbeute: 205 g (60 %) GC: >99 %

| Mikroanalyse | | |
|---|---|---|
| | berechnet | gefunden |
| C | 68.68 | 68.64 |
| H | 11.07 | 11.21 |
| N | 6.16 | 6.32 |
| Cl | 0.0 | 0.0 |

¹H-NMR (CDCl₃):
1,02 und 1,16 ppm (12 H,s): CH₃-Gruppen des Piperidinrings
1,32-1,4 ppm und 1,83-1,91 ppm (4 H, m): -CH₂-Gruppen des Piperidinrings
2,23 ppm (3 H, s): N-CH₃
2,60-2,62 ppm und 2,78-2,82 ppm (2 H, m): CH₂-Gruppe des Epoxidrings
3,42-3,47 ppm und 3,71-3,76 ppm (2 H, m): 0-CH₂-Gruppe
3,57-3,67 ppm (1 H, m): CH-O des Piperidinrings

A2) 1-Cyclohexyloxy-2,2,6,6-tetramethyl-4-(2,3-epoxypropoxy)piperidin
A2a) 4-Acyloxy-2,2,6,6-tetramethylpiperidin
In einem 10 l Planschliffgefäss mit mechanischem Rührer, Thermometer, Kühler und Tropfrichter werden unter Stickstoff 786,5 g (5 Mol)
4-Hydroxy-2,2,6,6-tetramethylpiperidin vorgelegt. Dazu gibt man 300 g (5 Mol)
Essigsäure und 1531 g (15 Mol) Essigsäureanhydrid. Man tropft langsam etwa 10 Tropfen konzentrierter Schwefelsäure dazu und lässt 12 Stunden bei 60°C rühren.
Bei einer Innentemperatur von weniger als 30°C gibt man eine Lösung von 1,2 kg Natriumoxid in 3 l Wasser dazu.
Das Gemisch wird zweimal mit 1 l Diethylether extrahiert, über Natriumsulfat getrocknet und das Lösungsmittel abgedampft.
Am Wasserstrahlvakuum wird die Substanz destilliert: Siedepunkt 103°C/15 Torr. Ausbeute: 700 g (70 %)
GC-Reinheit > 95 %

| Mikroanalyse | | |
|---|---|---|
| | berechnet | gefunden |
| C | 66.29 | 66.03 |
| H | 10.62 | 10.74 |
| N | 7.03 | 6.93 |

IR (KBr-Platten): C=O st. bei 1740 cm⁻¹
¹H-NMR (CDCl₃):
1,03-1,18 ppm (2 H,m): -CH₂-
1,15 ppm (6 H, s): CH₃-C
1,24 ppm (6 H, s): CH₃-C
1,89-1,95 ppm (2 H, m): -CH₂-
2,03 ppm (3 H, s): CH₃COO-
A2b) 1-Cyclohexyloxy-2,2,6,6-tetramethyl-4-acetoxypiperidin
In einem 1,5 1 Sulfierkolben mit Magnetrührer, Wasserabscheider, Thermometer und Tropfrichter wird unter Stickstoff 60 g (301 mMol) 4-Acetoxy-2,2,6,6-tetramethylpiperidin in 300 ml Cyclohexan gelöst. Dazu gibt man 4,3 g (30 mMol) Molybdänoxid. 154 g (1,2 Mol) einer wässrigen 70 %igen Lösung von t-Butylhydroperoxid werden dreimal mit je 35 ml Cyclohexan extrahiert, die organische Phase über Natriumsulfat getrocknet und in den Tropfrichter transferiert.
Man erwärmt die Reaktionsmischung zum Rückfluss und tropft innerhalb von 2 Stunden die t-Butylhydroperoxidlösung dazu. Nach weiteren 2 Stunden ist die Wasserabspaltung abgeschlossen. Die Mischung wird Nacht auf Rückflusstemperatur gehalten. Dann wird auf 25°C abgekühlt und vom Katalysator abfiltriert. Man versetzt mit Eis, gibt zur Vernichtung von überschüssigem Hydroperoxid etwas Natriumsulfit dazu und trennt dann die organische Phase ab. Diese wird mit Wasser gewaschen, über Natriumsulfat getrocknet und das Lösungsmittel am Rotavap entfernt.
Ausbeute: 85 g (95 %)
Die Flüssigkeit wird zu Analysezwecken im Kugelrohr destilliert. Die farblose Flüssigkeit siedet bei 115°C/0,05 Torr.
GC-Analyse: 96 %

| Mikroanalyse | | |
|---|---|---|
| | berechnet | gefunden |
| C | 68.65 | 68.57 |
| H | 10.51 | 10.49 |
| N | 4.71 | 4.56 |

¹H-NMR (CDCl₃):
1,19 ppm (12 H,s): CH₂-C
1,08-2,02 ppm (14 H, m): -CH₂-
2,01 ppm (3 H, s): CH₃-C00
4,95-5,05 ppm (1 H, m):

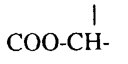

A2c) 1-Cyclohexyloxy-2,2,6,6-tetramethyl-4-hydroxypiperidin
In einem Erlenmeyerkolben werden 24 g (428 mmol) Kaliumhydroxid in 600 ml Methanol gelöst. Zur warmen Lösung werden 85 g (286 mmol) 1-Cyclohexyloxy-2,2,6,6-tetramethyl-4-acetoxypiperidin unter Rühren zugegossen. Anschliessend giesst man auf Eis und extrahiert mit Diethylether. Nach dem Trocknen über Natriumsulfat wird Ether abgedampft und der dickflüssige Rückstand in 300 ml Acetonitril warm gelöst. Man filtriert und lässt kristallisieren; Ausbeute: 50 g (68 %).
Die farblose Substanz hat einen Schmelzpunkt von 78,5°C; Reinheit gemäß GC-Analyse: 96 %.

| Mikroanalyse | | |
|---|---|---|
| | berechnet | gefunden |
| C | 70.54 | 70.55 |
| H | 11.45 | 11.59 |
| N | 5.48 | 5.36 |

¹H-NMR (CDCl₃):
1,14 ppm und 1,24 ppm (12 H,s): CH₃
1,08-2,07 ppm (14 H, m): -CH₂-
3,57 - 3,62 ppm (1 H, m):
4,95-5,05 ppm (1 H, m): 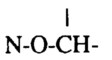
3,90 - 3,99 ppm (1 H, m):

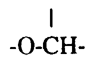

A2d) 1-Cyclohexyloxy-2,2,6,6-tetramethyl-4-(2,3-epoxypropoxy)piperidin
In einem 750 ml Sulfierkolben, ausgerüstet mit Rührer, Thermometer und Tropfrichter wird unter Argon 78,4 g (1,96 Mol) Natriumhydroxid in 80 ml Wasser gelöst. Dazu gibt man 100 g (392 mmol) 1-Cyclohexyloxy-2,2,6,6-tetramethyl-4-hydroxypiperidin und 12,6 g (39,2 mmol) Tetrabutylammoniumbromid gelöst in 250 ml Toluol. Es wird auf 50-55°C erwärmt und während 45 Minuten werden tropfenweise 90,7 g (980 mmol) Epichlorhydrin zugegeben. Dabei wird das Gemisch stark gerührt.
Man lässt bei 55°C weitere 3 Stunden rühren. Dann giesst man die Reaktionsmischung auf 1 Liter Eiswasser, trennt die organische Phase ab und wäscht diese einmal mit Wasser.
Die organische Phase wird über Natriumsulfat getrocknet, mit Aktivkohle entfärbt, filtriert und eingedampft.
Der Rückstand wird über eine Vigreuxkolonne destilliert: Siedepunkt
116-117°C/0.06 Torr.
Ausbeute: 78,7 g (64 %)
GC-Reinheit: 98 %

| Mikroanalyse | | |
|---|---|---|
| | berechnet | gefunden |
| C | 69.41 | 69.34 |
| H | 10.68 | 11.24 |
| N | 4.50 | 4.39 |

¹H-NMR (CDCl₃):
1,13 ppm und 1,119 ppm (12 H, s) CH₃-
1,08 ppm - 2,04 ppm (14 H,m): -CH₂-
2,59 ppm - 2,81 ppm (2 H, m): CH₂-Epoxidring
3,10 ppm - 3,43 ppm (2 H, m): CH₂-Epoxid
3,56 ppm - 3,73 ppm (3 H, m): CH-Epoxidring und CH-O der Sechserringe

A3) 1-Octyloxy-2,2,6,6-tetramethyl-4-(2,3-epoxypropoxy)-piperidin
In einem 750 ml Sulfierkolben mit mechanischem Rührer, Thermometer, Tropftrichter und Kühler werden 100 g (2,5 Mol) Natriumhydroxid in 100 ml Wasser gelöst. Bei 20°C gibt man 71,9 g (0,25 Mol) 1-Octyloxy-2,2,6,6-tetramethyl-4-hydroxypiperidin und 16,1 g (0,05 Mol) Tetrabutylammoniumbromid dazu.
Es wird unter starkem Rühren auf 30°C erwärmt. Dann wird eine Lösung aus 277,5 g (3 Mol) Epichlorhydrin und 71,9 g (0,25 Mol) 1-Octyloxy-2,2,6,6-tetramethyl-4-hydroxypiperidin während 75 Minuten tropfenweise bei 35°C dazugegeben.
Man lässt bei Raumtemperatur für 16 Stunden rühren und giesst die Reaktionslösung auf 1 kg Eis und 100 g Natriumbicarbonat. Die organische Phase wird abgetrennt. Die Wasserphase wird mit Essigester extrahiert. Beide organischen Phasen werden mit Kochsalz-gesättigtem Wasser gewaschen, über Natriumsulfat getrocknet und am Rotovap eingedampft.
Der Rückstand wird bei 130-134°C/0,01 Torr destilliert.
Man erhält 109.8 g (64 %) einer klaren, farblosen Flüssigkeit.

| Mikroanalyse: | | | |
|---|---|---|---|
| | C | H | N |
| berechnet | 70,34 | 11,51 | 4,10 |
| gefunden | 70,59 | 11,56 | 4,19 |

¹H-NMR (CDCl₃)
0,836-1,81 ppm (32H, m): CH₃, CH₂ Piperidin; CH₃, CH₂ i-Octyl, n-Octyl
2,59-2,61 ppm und 2,78-2,81 ppm (2H, m): CH₂ (Epoxid)
3,10-3,15 ppm (1H, m): CH (Epoxid)
3,38-3,44 ppm (1H, m): C-O-CH₂
3,56-3,85 ppm (3H, m): C-O-CH₂, N-O-CH〈,

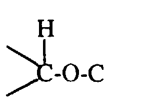

A4) 1-Benzyl-2,2,6,6-tetramethyl-4-(2,3-epoxypropoxy)piperidin
In einem 1,5 l Sulfierkolben mit mechanischem Rührer, Thermometer, Kühler und Tropftrichter werden 200 g (5 Mol) Natriumhydroxyd in 200 ml Wasser gelöst. Dazu gibt man bei 50°C 247,4 g 1-Benzyl-2,2,6,6-tetramethyl-4-hydroxypiperidin, 32,2 g (0,1 Mol) Tetrabutylammoniumbromid und 500 ml Toluol. Unter starkem Rühren tropft man bei 50°C-55°C 185 g (2 Mol) Epichlorhydrin dazu. Man lässt für 16 Stunden bei 55°C rühren. Die abgekühlte Lösung wird auf 2 l Wasser und 220 g Natriumbicarbonat gegeben und zweimal mit Essigester extrahiert. Die organischen Phasen werden getrocknet und eingedampft.
Der Rückstand wird bei 120°C/0,008 Torr destilliert.
Man erhält 165 g (54 %) einer klaren Flüssigkeit.

| Mikroanalyse: | | | |
|---|---|---|---|
| | C | H | N |
| berechnet | 75,21 | 9,63 | 4,62 |
| gefunden | 75.17 | 9,58 | 4,71 |

¹H-NMR (CDCl₃):
0,98 und 1,11 ppm (12H, s): CH₃
1,44-1,54 ppm und 1,88-1,97 ppm (4H, m): CH₂ (Piperidin)
2,62-2,64 ppm und 2,79-2,83 ppm (2H, m): CH₂ (Epoxidring)
3,13-3,19 ppm (1H, m): CH (Epoxidring)
3,45-3,51 ppm und 3,73-3,78 ppm (2H, m): CH₂ (Epoxid)
3,68-3,77 ppm (1H, m): 〉CH-O
3,81 ppm (2H, s): N-CH₂-Aromat
7,11-7,42 ppm (5H, m): H-Aromat

A5) Herstellung von 2,2,6,6-Tetramethyl-4-(2,3-epoxypropoxy)-piperidin
In einem 750 ml Sulfierkolben mit mechanischem Rührer, Kühler, Thermometer und 100 ml Tropftrichter werden unter Argon 64,0 g Natriumhydroxid (1,6 Mol) in 64 ml Wasser gelöst. Dazu gibt man 170 ml Toluol, 10,3 g (31,8 mmol) Tetrabutylammoniumbromid und 50 g (318 mmol) 4-Hydroxy-2,2,6,6-tetramethylpiperidin.
Bei 45°C werden 58,8 g (636 mmol) Epichlorhydrin zugetropft. Man lässt dann bei 50°C während 4 Stunden rühren. Das Reaktionsgemisch wird auf Raumtemperatur gekühlt und auf 1 l Eiswasser gegossen, die organische Phase abgetrennt, mit Natriumsulfat getrocknet und am Rotationsverdampfer eingeengt.
Der Rückstand wird bei 8.10⁻³ Torr destilliert. Siedepunkt: 48°C, Ausbeute: 28 g (41 %). GC: 98 %.

| Mikroanalyse: | | |
|---|---|---|
| | berechnet | gefunden |
| C | 67.57 | 67.73 |
| H | 10.87 | 10.92 |
| N | 6.57 | 6.51 |

H-NMR(CDCl₃):
0,577 ppm (1 H): NH
0,81-0,98 ppm (2 H, m): CH₂ (Piperidinring)
1,01 und 1,05 ppm (12 H, s): CH₃-Gruppen
1,77-1,87 ppm (2 H, m): CH₂ (Piperidinring)
2,47-2,50 und 2,66-2,69 ppm (2 H, m): CH₂ (Epoxidring)
2,99-3,04 ppm (1 H, m): CH (Epoxidring)
3,31-3,37 und 3,61-3,67 ppm (3 H, m): CH₂ (Epoxid) und CH-O (Piperidinring)

B) Herstellung der Polymeren
B1) Poly[1,2,2,6,6-Pentamethyl-4-(2,3-epoxypropoxy)-piperidin]
In einem wasserfreien 250 ml Rundkolben wird unter Argon 80 g (352 mmol) des unter A1) hergestellten Epoxids vorgelegt. Dazu gibt man 1,6 g (14,1 mmol) Kalium-tert.-butylat und 1,4 g (5,3 mmol) 18-Crown-6. Die Mischung wird mittels Magnetrührer gerührt, wobei spontan die exotherme Polymerisation einsetzt. Nach 2 Stunden ist die Mischung hochviskos. Man löst in Tetrahydrofuran, versetzt die Lösung mit Aktivkohle, filtriert und fällt in Acetonitril aus. Das abgetrennte Oel wird nochmals in Tetrahydrofuran gelöst und in Acetonitril ausgefällt. Das erhaltene Oel wird am Hochvakuum getrocknet.
Ausbeute an zähviskosem Polymer: 59,4 g (71 %)

| Mikroanalyse: | | |
|---|---|---|
| | berechnet | gefunden |
| C | 68.68 | 68.45 |
| H | 11.07 | 11.49 |
| N | 6.16 | 5.94 |

- ¹H-NMR (CDCl₃):: Im Bereich zwischen 2,4 und 3,4 ppm sind keine Epoxidringprotonen feststellbar, d.h. es ist kein Monomer mehr vorhanden.

1,01 ppm und 1,15 ppm (12 H, s): CH₃-C
1,24-1,87 ppm (4 H, m): C-CH₂-C
2,22 ppm (3 H, s): CH₃N
3,49-3,67 ppm (6 H, m): CH-O und CH₂-O

- GPC (THF):: Mₙ: 2170
M_{w}: 3630
M_{w}/Mₙ: 1,67

B2) Poly[1-Cyclohexyloxy-2,2,6,6-tetramethyl-4-(2,3-epoxypropoxy)-piperidin]
B2a) Polymerisation mit Natriummethanolat
35 g (112,5 mmol) des unter A2) hergestellten Epoxids wird in einem trockenen, 50 ml Rundkolben mit Magnetrührer vorgelegt. Unter Argon gibt man man 0,2 g (3,7 mmol) Natriummethanolat und 0,8 g (3,6 mmol) 15-Crown-5 dazu.
Man lässt bei 150°C während 15 Stunden polymerisieren. Die hochviskose Masse wird in 100 ml Tetrahydrofuran gelöst und auf 600 ml Acetonitril ausgefällt. Erneutes lösen und Ausfällen liefert nach der Trocknung dem Hochvakuum eine hochviskose Masse.
Ausbeute: 23,5 g (67 %)

| Mikroanalyse: | | |
|---|---|---|
| | berechnet | gefunden |
| C | 69.41 | 68.99 |
| H | 10.68 | 10.73 |
| N | 4.50 | 4.38 |

- ¹H-NMR (CDCl₃):: Keine Epoxidring-Protonen mehr feststellbar
- GPC (THF):: Mₙ: 1783, M_{w}: 2327, M_{w}/Mₙ: 1,3

B2b) Polymerisation mit Kalium-tert.butylat
15 g (48,2 mmol) des unter A2) hergestellten Epoxids, 0,2 g (1,8 mmol) Kalium-tert.butylat und 0,2 g (0,7 mmol) 18-Crown-6 werden in eine Ampulle transferiert und unter Hochvakuum während 14 Stunden bei 150°C polymerisiert. Der Festkörper wird in 60 ml THF gelöst und in 600 ml Acetonitril ausgefällt. Das erhaltene Oel wird erneut in THF gelöst und in Acetonitril ausgefällt. Nach dem Trocknen bei 40°C während 3 Stunden erhält man eine hochviskose Masse.
Ausbeute: 6 g (40 %)

| Mikroanalyse: | | |
|---|---|---|
| | berechnet | gefunden |
| C | 69.41 | 68.90 |
| H | 10.68 | 10.67 |
| N | 4.50 | 4.33 |

- ¹H-NMR (CDCl₃):: Keine Epoxidringprotonen sichtbar
- GPC (THF):: Mₙ: 4670
M_{w}: 12500
M_{w}/Mₙ: 2,68

B3) Poly[1-Octyloxy-2,2,6,6-tetramethyl-4-(2,3-epoxypropoxy)piperidin]
In einem 100 ml Rundkolben mit Magnetrührer werden unter Argon 85 g (249 mmol) der unter A3) hergestellten Substanz, 1,12 g (10 mmol) Kalium-tert.-butylat und 1,12 g 18-crown-6 vorgelegt. Nach dreimaligem Entgasen wird unter Argon bei 150°C 20 Stunden lang polymerisiert.
Der Festkörper wird in THF gelöst, mit Aktivkohle behandelt, filtriert und in Acetonitril ausgefällt. Erneutes Lösen in THF und Fällen in Acetonitril liefert 20,2 g (24 %) eines Polymeren.

| Mikroanalyse: | | | |
|---|---|---|---|
| | C | H | N |
| berechnet | 70,34 | 11,51 | 4,10 |
| gefunden | 68,84 | 11,47 | 4,09 |

- GPC (THF):: Mn 2390, Mw 3490
- TGA (20°C/min, Stickstoff):: 5 % Masseverlust bei 240°C, zweistufiger Masserverlust (220-280°C: Abspaltung der Octyloxy-Gruppe; 350-440°C: Zerfall des Restkörpers)

B4) Poly[1-Benzyl-2,2,6,6-tetramethyl-4-(2,3-epoxypropoxy)piperidin]
30 g (98,8 mmol) des Monomers A4), 0,44 g (4 mmol) Kalium-tert.-butylat und 0,44 g (1,66 mmol) 18-crown-6 werden in eine 100 ml Ampulle gefüllt und vom Sauerstoff befreit.
Unter Argon lässt man bei 150°C für 16 Stunden polymerisieren. Der Festkörper wird in THF gelöst und in Acetonitril ausgefällt. Lösen und Ausfällen wird wiederholt. Nach dem Trocknen am Hochvakuum erhält man 23,1 g (78 %) eines schwach beigen Festkörpers.

| Mikroanalyse: | | | |
|---|---|---|---|
| | C | H | N |
| berechnet | 75,21 | 9,63 | 4,62 |
| gefunden | 74,50 | 9,61 | 4,27 |

GPC (THF): Mn 3350, Mw 5900
TGA (20°C/min, Stickstoff): 5 % Masseverlust bei 370°C
DTA (10°C/min): Schmelzpunkt 47°C

B5) Poly[2,2,6,6-Tetramethyl-4-(2,3-epoxypropoxy)-pipeddin]
In einem 100 ml Rundkolben mit Magnetrührer werden unter Argon 53 g (248 mmol) des unter A5) hergestellten Epoxids, 1,2 g (10 mmol) Kalium-tert.-butylat und 1,2 g 18-crown-6 vorgelegt. Nach dreimaligem Entgasen wird unter Argon bei 150°C 6 Stunden reagieren gelassen. Die feste Masse wird in THF gelöst, mit Aktivkohle entfärbt, filtriert und eingedampft. Man erhält ein Polymer, das in allen Lösungsmitteln löslich ist (Wasser, n-Hexan etc.).
Dieses wird am Hochvakuum 4 Std. bei 70°C und 1 Std. bei 100°C getrocknet.
Man erhält 50,3 g eines schwach klebrigen Feststoffs (95 %).

| Mikroanalyse: | | | |
|---|---|---|---|
| | C | H | N |
| berechnet | 67,57 | 10,87 | 6,57 |
| gefunden | 67,44 | 10,86 | 6,51 |

GPC (DMF 0,05 M LiBr) Mₙ: 11000 M_{w}: 12000
MALDI (Matrix Assisted Laser Desorption Ionization) Mₙ: 5100 M_{w}: 6100
¹H-NMR (CDCl₃):
0,66 ppm (1 H, s): NH
0,97-1,04 ppm (2 H, m): CH₂ (Piperidinring)
1,14 und 1,18 ppm (12 H, s): CH₃
1,93-1,96 ppm (2 H, m): CH₂ (Piperidinring)
3,54-3,67 ppm (6 H, m): CH, CH₂ (Epoxid) und CHO (Piperidin)
TGA (2°C/min, Luft): 10 % Gewichtsverlust bei 290°C

B6) Copolymer aus A1 und A2
24,3g (107 mmol) 1,2,2,6,6-Pentamethyl-4-(2,3-epoxypropoxy)-piperidin (Monomer A1), 33,3 g (107 mmol) 1-Cyclohexyloxy-2,2,6,6-tetramethyl-4-(2,3-epoxypropoxy)-piperidin (Monomer A2), 2,40 mg (2,14 mmol) Kalium-tert.-butylat und 240 mg (0,91 mmol) 18-Crown-6 werden entgast und unter Argon bei 150°C während 18 Stunden belassen.
Nach dem Abklühlen auf Raumtemperatur wird der glasartige Festkörper in THF gelöst und in Acetonitril gefällt. Das so gewonnene Material wird nochmals in THF gelöst, mit Aktivkohle entfärbt und in Acetonitril gefällt. Man erhält ein beiges Pulver, das am Hochvakuum getrocknet wird.
Ausbeute: 51,3 g (89 %)

| Mikroanalyse: | | | |
|---|---|---|---|
| | C | H | N |
| berechnet | 69,10 | 10,85 | 5,20 |
| gefunden | 68,42 | 11,04 | 5,15 |

¹H-NMR (CDCl₃): 1:1 Copolymer, keine Epoxidringe mehr sichtbar
GPC (THF): Mₙ = 3500 M_{w} = 5200
DSC (10°C/Min.): Tg = 18°C

B7) Copolymer aus A1 und A5
22,7 g (0,1 Mol) 1,2,2,6,6-Pentamethyl-4-(2,3-epoxypropoxy)-piperidin (Monomer A1), 21,3 g (0,1 Mol) 4-(2,3-Epoxypropoxy)-2,2,6,6-tetramethylpiperidin (Monomer A5), 448 mg (4 mmol) Kalium-tert.butylat und 448 mg 18-Crown-6 werden in einem 100 ml Rundkolben vorgelegt und vom Sauerstoff befreit. Unter Argon wird bei 150°C während 20 Stunden polymerisiert. Das Polymer wird in THF gelöst und in Acetonitril gefällt.
Diese Operation wird nochmals wiederholt.
Das gefällte Polymer wird am Hochvakuum bei 60°C getrocknet.
Ausbeute: 16,5 g (37 %)
C) Anwendungsbeispiele

### Beispiel C1: Lichtstabilisierung von Polypropylenfasern

Je 2,5 g des erfindungsgemäßen Stabilisators werden zusammen mit 1 g Tris(2,4-di-tert.-butylphenyl )phosphit, 1 g Calcium-Monoethyl-3,5-di-tert.butyl-4-hydroxybenzylphosphonat, 1 g Calciumstearat und 2,5 g TiO₂ (Kronos RN 57) in einem Turbomischer mit 1000 g Polypropylenpulver vermischt (Schmelzindex 12 g/10 min, gemessen bei 230°C/2,16 kg).
Die Mischungen werden bei 200-230°C zu Granulat extrudiert; dieses wird anschließend mit Hilfe einer Pilotanlage (Leonard; Sumirago/VA, Italy) unter folgenden Bedingungen zu Fasern verarbeitet:

| | |
|---|---|
| Extrudertemperatur | 190-230°C |
| Kopftemperatur | 255-260°C |
| Streckverhältnis | 1:3,5 |
| Strecktemperatur | 100°C |
| Fasern | 10 den |

Die so hergestellten Fasern werden für 20 Minuten in einen auf 120°C beheizten Umluftofen gegeben und anschließend vor weißem Hintergrund in einem Weather-OMeter® Typ 65WR (Atlas Corp.) mit einer Schwarztafeltemperatur von 63°C gemäß ASTM D 2565-85 belichtet. Nach unterschiedlichen Belichtungszeiten wird die verbliebene Zugfestigkeit der Proben gemessen. Aus den Meßwerten wird die Belichtungszeit T₅₀ berechnet, nach der die Zugfestigkeit der Proben nur noch halb so groß ist.

Zu Vergleichszwecken werden Fasern ohne erfindungsgemäßen Stablisator unter sonst gleichen Bedingungen hergestellt und getestet. Die Testergebnisse sind in Tabelle C1 zusammengestellt.

**Tab. C1:**

| Belichtungsdauer bis Halbierung der anfänglichen Zugfestigkeit | |
|---|---|
| Stabilisator | Belichtungsdauer |
| keiner | 300 h |
| aus Beispiel B1 | 1920 h |
| aus Beispiel B4 | 2060 h |

Die erfindungsgemäß stabilisierten Fasern weisen einen hervorragenden Festigkeitserhalt auf.

### Beispiel C2: Stabilisierung eines Zweischicht-Lackes

Die Lichtschutzmittel werden in 5-10 g Xylol eingearbeitet und in einem Klarlack folgender Zusammensetzung geprüft:

| | |
|---|---|
| Synthacryl® SC 303 ¹⁾ | 27,51 |
| Synthacryl® SC 370 ²⁾ | 23,34 |
| Maprenal® MF 650 ³⁾ | 27,29 |
| Butylacetat/Butanol (37/8) | 4,33 |
| Isobutanol | 4,87 |
| Solvesso® 150 ⁴⁾ | 2,72 |
| Kristallöl K-30 ⁵⁾ | 8,74 |
| Verlaufshilfsmittel Baysilon® MA ⁶⁾ | 1,20 |
| | 100,00 g |

| | |
|---|---|
| 1) Acrylatharz, Fa. Hoechst AG; 65 % Lösung in Xylol/Butanol 26:9 | |
| 2) Acrylatharz, Fa. Hoechst AG; 75 % Lösung in Solvesso®100⁴⁾ | |
| 3) Melaminharz, Fa. Hoechst AG; 55 % Lösung in Isobutanol | |
| 4) Hersteller: Fa. ESSO | |
| 5) Hersteller: Fa. Shell | |
| 6) 1 % in Solvesso® 150; Hersteller: Fa. Bayer AG | |

Dem Klarlack werden 1 % Stabilisator zugesetzt, bezogen auf den Feststoffgehalt des Lackes. Als Vergleich dient ein Klarlack, der kein Lichtschutzmittel enthält.

Der Klarlack wird mit Solvesso® 100 auf Spritzfähigkeit verdünnt und auf ein vorbereitetes Aluminiumblech (coil coat, Füller, silbermetallic Basislack) gespritzt und bei 130°C 30 Minuten eingebrannt. Es resultiert eine Trockenfilmdicke von 40-50 µm Klarlack.

Die Proben werden dann in einem UVCON®-Bewitterungsgerät der Fa. Atlas Corp. (UVB-313 Lampen) bei einem Zyklus von 4 h UV-Bestrahlung bei 60°C und 4 h Kondensation bei 50°C bewittert.

Die Proben werden in regelmässigen Abständen auf Risse untersucht. Die Ergebnisse sind in Tabelle C2 aufgeführt.

**Tab. C2:**

| Bewitterungsdauer bis zur Rissbildung | |
|---|---|
| Stabilisator | Rissbildung nach |
| ohne | 1200 h |
| aus Beispiel B1 | 4800 h |
| aus Beispiel B2 | > 4800 h |
| aus Beispiel B3 | > 4800 h |
| aus Beispiel B4 | > 4800 h |

Die Proben mit den erfindungsgemäßen Stabilisatoren weisen eine hohe Beständigkeit gegenüber Rissbildung auf.

### Beispiel C3: Stabilisierung eines photographischen Materials

0,087 g des Gelbkupplers der Formel 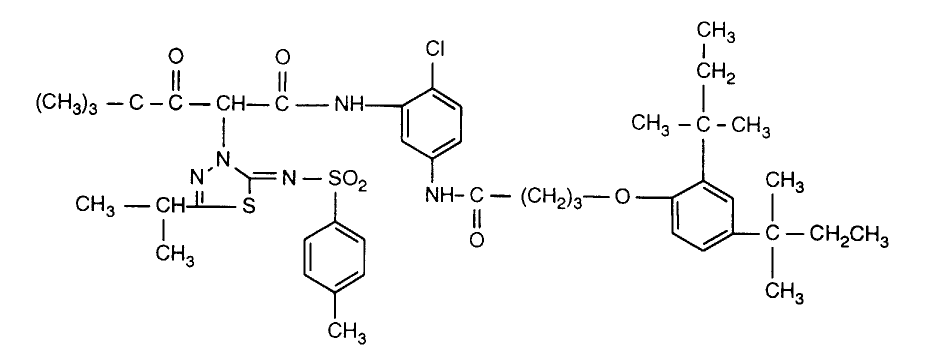 werden in 2,0 ml einer Lösung des erfindungsgemässen Stabilisators in Ethylacetat (2,25 g/100 ml) gelöst. Zu 1,0 ml dieser Lösung gibt man 9,0 ml einer 2,3%-igen wässrigen Gelatinelösung, die auf einem pH-Wert von 6,5 eingestellt ist, und 1,744 g/l des Netzmittels der Formel 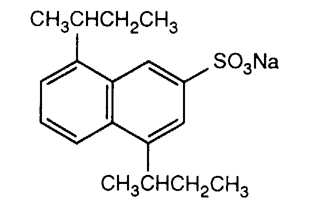 enthält.

Zu 5,0 ml der so erhaltenen Kuppleremulsion gibt man 2 ml einer Silberbromid-Emulsion mit einem Silbergehalt von 6,0 g/l sowie 1,0 ml einer 0,7%-igen wässrigen Lösung des Härters der Formel 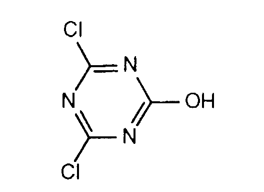 und vergiesst es auf ein 13 x 18 cm Kunststoff-beschichtetes Papier. Nach einer Härtungszeit von 7 Tagen werden die Proben hinter einem Silber-Stufenkeil mit 125 Lux•s belichtet und anschliessend im Ektaprint 2®-Prozess der Firma Kodak verarbeitet.

Die erhaltenen Gelbkeile werden in einem Atlas Weather-Ometer mit einer 2500 W-Xenonlampe hinter einem UV-Filter (Kodak 2C) mit total 60 k Joule/cm² bestrahlt.

Eine Probe ohne Stabilisator läuft als Standard mit.

Der bei der Bestrahlung eingetretene Farbdichteverlust beim Absorptionsmaximum des gelben Farbstoffes wird mit einem Densitometer TR 924A der Fa. Macbeth gemessen.

Der Lichtschutzeffekt ist aus dem Farbdichteverlust ersichtlich. Je kleiner der Dichteverlust, desto höher ist die Lichtschutzwirksamkeit.

Die erfindungsgemässen Stabilisatoren zeigen eine gute Lichtschutzwirkung.

## Patentansprüche

1. Polyether der Formel I 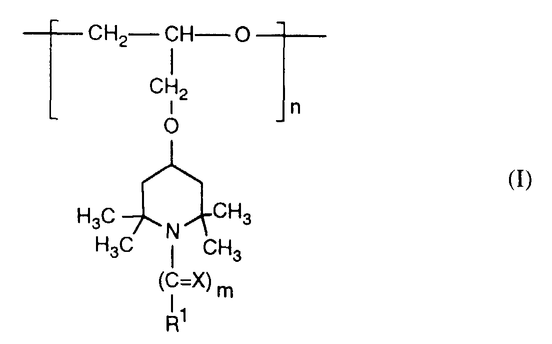 worin m 0 oder 1 ist; n eine ganze Zahl aus dem Bereich von 3 bis 100 bedeutet;
R¹ im Fall, daß m 0 oder 1 ist, C₁-C₃₆-Alkyl, oder C₇-C₃₆-Aralkyl, die jeweils unsubstituiert oder durch C₅-C₈-Cycloalkyl substituiert, im aliphatischen Teil durch C₅-C₈-Cycloalkylen oder durch Sauerstoff oder Schwefel oder -NR¹¹- unterbrochen oder im aromatischen Teil durch 1 bis 3 C₁-C₄-Alkyl- und/oder C₁-C₄-Alkoxyreste substituiert sind; C₃-C₃₆-Alkenyl; C₅-C₁₂-Cycloalkyl, welches unsubstituiert oder durch 1 bis 4 der C₁-C₄-Alkyl- und/oder C₁-C₄-Alkoxyreste substituiert ist; C₆-C₁₀-Aryl, welches unsubstituiert oder durch 1 bis 4 C₁-C₄-Alkyl- und/oder C₁-C₄-Alkoxyreste substituiert ist, bedeutet; und
R¹ im Fall, daß m 0 ist, zusätzlich Wasserstoff; C₁-C₃₆-Alkoxy oder C₇-C₃₆-Aralkoxy, die jeweils unsubstituiert oder durch C₅-C₈-Cycloalkyl substituiert, im aliphatischen Teil durch C₅-C₈-Cycloalkylen oder durch Sauerstoff oder Schwefel oder -NR¹¹- unterbrochen oder im aromatischen Teil durch 1 bis 3 C₁-C₄-Alkyl- und/oder C₁-C₄-Alkoxyreste substituiert sind; C₃-C₃₆-Alkenyloxy; C₅-C₁₂-Cycloalkoxy, welches unsubstituiert oder durch 1 bis 4 C₁-C₄-Alkyl- und/oder C₁-C₄-Alkoxyreste substituiert ist; und C₆-C₁₀-Aryloxy, welches unsubstituiert oder durch 1 bis 4 C₁-C₄-Alkyl- und/oder C₁-C₄-Alkoxyreste substituiert ist, umfaßt;
R¹¹ C₁-C₁₈-Alkyl, C₅-C₈-Cycloalkyl, Phenyl oder C₇-C₉-Phenylalkyl; und
X ein Sauerstoff- oder Schwefelatom darstellt.

2. Polyether gemäß Anspruch 1, worin m 0 ist.

3. Polyether gemäß Anspruch 1, worin n eine ganze Zahl aus dem Bereich von 4 bis 50 bedeutet;
R¹ im Fall, daß m 0 oder 1 ist, C₁-C₃₆-Alkyl; durch -O- unterbrochenes C₂-C₃₆-Alkyl; C₇-C₃₆-Aralkyl; im aliphatischen Teil durch -O- unterbrochenes und/oder im aromatischen Teil durch 1 bis 3 C₁-C₄-Alkyl- oder C₁-C₄-Alkoxyreste substituiertes C₇-C₃₆-Aralkyl; C₅-C₉-Cycloalkyl, welches unsubstituiert oder durch 1 bis 3 C₁-C₄-Alkyl- oder C₁-C₄-Alkoxyreste substituiert ist; Phenyl, welches unsubstituiert oder durch 1 bis 3 C₁-C₄-Alkyl- oder C₁-C₄-Alkoxyreste substituiert ist, bedeutet; und
R¹ im Fall, daß m 0 ist, zusätzlich C₁-C₃₆-Alkoxy; durch -O- unterbrochenes C₂-C₃₆-Alkoxy; C₇-C₃₆-Aralkoxy; im aliphatischen Teil durch -O- unterbrochenes und/oder im aromatischen Teil durch 1 bis 3 C₁-C₄-Alkyl- oder C₁-C₄-Alkoxyreste substituiertes C₇-C₃₆-Aralkoxy; C₅-C₉-Cycloalkoxy, welches unsubstituiert oder durch 1 bis 3 C₁-C₄-Alkyl- oder C₁-C₄-Alkoxyreste substituiert ist; und Phenyloxy, welches unsubstituiert oder durch 1 bis 3 C₁-C₄-Alkyl- oder C₁-C₄-Alkoxyreste substituiert ist, umfaßt; und
X ein Sauerstoffatom darstellt.

4. Polyether gemäß Anspruch 3, worin m 0 ist;
R¹ C₁-C₁₈-Alkyl; C₄-C₃₆-Alkoxy; durch -O- unterbrochenes C₂-C₁₈-Alkyl; durch -O- unterbrochenes C₄-C₃₆-Alkoxy; C₇-C₁₈-Phenylalkyl; C₇-C₁₈-Phenylalkoxy; jeweils am Phenylring durch 1 bis 3 C₁-C₄-Alkylreste substituiertes C₇-C₁₈-Phenylalkyl oder C₇-C₁₈-Phenylalkoxy; C₅-C₉-Cycloalkyl; C₅-C₉-Cycloalkoxy; Phenyl, welches unsubstituiert oder durch 1 bis 3 Reste C₁-C₄-Alkyl substituiert ist; Phenyloxy, welches unsubstituiert oder durch 1 bis 3 Reste C₁-C₄-Alkyl substituiert ist, bedeutet.

5. Polyether gemäß Anspruch 4, worin m 0 ist;
R¹ C₁-C₁₈-Alkyl; C₄-C₁₈-Alkoxy; durch -O- unterbrochenes C₂-C₁₈-Alkyl; durch -O- unterbrochenes C₄-C₃₆-Alkoxy; C₇-C₉-Phenylalkyl; C₇-C₉-Phenylalkoxy; jeweils am Phenylring durch 1 bis 3 Reste C₁-C₄-Alkyl substituiertes C₇-C₉-Phenylalkyl oder C₇-C₉-Phenylalkoxy; C₅-C₉-Cycloalkyl; C₅-C₉-Cycloalkoxy; Phenyloxy, welches unsubstituiert oder durch 1 bis 3 Reste C₁-C₄-Alkyl substituiert ist, bedeutet.

6. Polyether gemäß Anspruch 5, worin
n eine ganze Zahl aus dem Bereich von 5 bis 30 bedeutet; und
R¹ C₁-C₁₈-Alkyl; C₄-C₁₈-Alkoxy; C₇-C₉-Phenylalkyl; oder C₅-C₉-Cycloalkoxy darstellt.

7. Zusammensetzung enthaltend (a) ein gegen Schädigung durch Licht, Sauerstoff und/oder Wärme empfindliches organisches Material und (b) als Stabilisator einen Polyether der Formel I gemäß Anspruch 1.

8. Zusammensetzung gemäß Anspruch 7, worin Komponente (a) ein organisches Polymer ist.

9. Zusammensetzung gemäß Anspruch 7, worin Komponente (a) ein Polyolefin, ein photographisches Material oder ein Lackbindemittel auf der Basis von Acryl-, Alkyd-, Polyurethan-, Polyester- oder Polyamidharz oder entsprechender modifizierter Harze ist.

10. Zusammensetzung gemäß Anspruch 7, enthaltend zusätzlich zu den Komponenten (a) und (b) ein konventionelles Additiv.

11. Zusammensetzung gemäß Anspruch 7 enthaltend 0,01 bis 10 Gew.-% der Komponente (b), bezogen auf das Gewicht der Zusammensetzung.

12. Verfahren zum Stabilisieren organischer Polymere gegen Schädigung durch Licht, Sauerstoff und/oder Wärme, dadurch gekennzeichnet, daß man den Polymeren als Stabilisator einen Polyether der Formel I gemäß Anspruch 1 beimischt.

13. Verwendung von Polyethern der Formel I gemäß Anspruch 1 zum Stabilisieren von organischem Material gegen Schädigung durch Licht, Sauerstoff und/oder Wärme.

## Claims

1. A polyether of the formula I 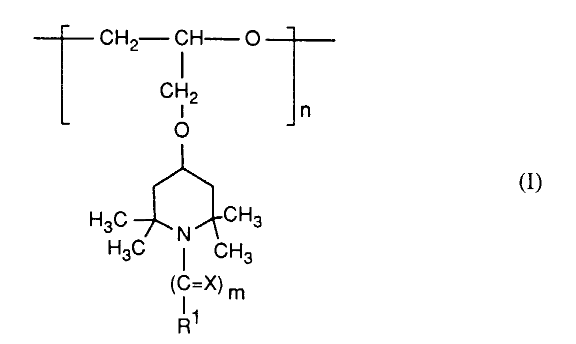 in which m is 0 or 1; n is an integer in the range from 3 to 100;
R¹, in the case where m is 0 or 1, is C₁-C₃₆alkyl, or C₇-C₃₆aralkyl, each of which is unsubstituted or substituted by C₅-C₈cycloalkyl, interrupted in the aliphatic part by C₅-C₈cycloalkylene or by oxygen or sulfur or -NR¹¹- or substituted in the aromatic part by 1 to 3 C₁-C₄alkyl and/or C₁-C₄alkoxy radicals; C₃-C₃₆alkenyl; C₅-C₁₂cycloalkyl which is unsubstituted or substituted by 1 to 4 of the C₁-C₄alkyl and/or C₁-C₄alkoxy radicals; or C₆-C₁₀aryl which is unsubstituted or substituted by 1 to 4 C₁-C₄alkyl and/or C₁-C₄alkoxy radicals; and
R¹, in the case where m is 0, additionally comprises hydrogen; C₁-C₃₆alkoxy or C₇-C₃₆aralkoxy, each of which is unsubstituted or substituted by C₅-C₈cycloalkyl, interrupted in the aliphatic part by C₅-C₈cycloalkylene or by oxygen or sulfur or -NR¹¹- or substituted in the aromatic part by 1 to 3 C₁-C₄alkyl and/or C₁-C₄alkoxy radicals; C₃-C₃₆alkenyloxy; C₅-C₁₂cycloalkoxy which is unsubstituted or substituted by 1 to 4 C₁-C₄alkyl and/or C₁-C₄alkoxy radicals; and C₆-C₁₀aryloxy which is unsubstituted or substituted by 1 to 4 C₁-C₄alkyl and/or C₁-C₄alkoxy radicals;
R¹¹ is C₁-C₁₈alkyl, C₅-C₈cycloalkyl, phenyl or C₇-C₉phenylalkyl; and
X is an oxygen or sulfur atom.

2. A polyether according to claim 1, in which m is 0.

3. A polyether according to claim 1, in which n is an integer in the range from 4 to 50;
R¹, in the case where m is 0 or 1, is C₁-C₃₆alkyl; C₂-C₃₆alkyl which is interrupted by -O-; C₇-C₃₆aralkyl; C₇-C₃₆aralkyl which is interrupted in the aliphatic part by -O- and/or is substituted in the aromatic part by 1 to 3 C₁-C₄alkyl or C₁-C₄alkoxy radicals; C₅-C₉cycloalkyl which is unsubstituted or substituted by 1 to 3 C₁-C₄alkyl or C₁-C₄alkoxy radicals; or phenyl which is unsubstituted or substituted by 1 to 3 C₁-C₄alkyl or C₁-C₄alkoxy radicals; and
R¹, in the case where m is 0, additionally comprises C₁-C₃₆alkoxy; C₂-C₃₆alkoxy which is interrupted by -O-; C₇-C₃₆aralkoxy; C₇-C₃₆aralkoxy which is interrupted in the aliphatic part by -O- and/or is substituted in the aromatic part by 1 to 3 C₁-C₄alkyl or C₁-C₄alkoxy radicals; C₅-C₉cycloalkoxy which is unsubstituted or substituted by 1 to 3 C₁-C₄alkyl or C₁-C₄alkoxy radicals; and phenoxy which is unsubstituted or substituted by 1 to 3 C₁-C₄alkyl and/or C₁-C₄alkoxy radicals; and
X is an oxygen atom.

4. A polyether according to claim 3, in which m is 0;
R¹ is C₁-C₁₈alkyl; C₄-C₃₆alkoxy; C₂-C₁₈alkyl which is interrupted by -O-; C₄-C₃₆alkoxy which is interrupted by -O-; C₇-C₁₈phenylalkyl; C₇-C₁₈phenylalkoxy; C₇-C₁₈phenylalkyl or C₇-C₁₈phenylalkoxy, each of which is substituted on the phenyl ring by 1 to 3 C₁-C₄alkyl radicals; C₅-C₉cycloalkyl; C₅-C₉cycloalkoxy; phenyl which is unsubstituted or substituted by 1 to 3 C₁-C₄alkyl radicals; or phenoxy which is unsubstituted or substituted by 1 to 3 C₁-C₄alkyl radicals.

5. A polyether according to claim 4, in which m is 0;
R¹ is C₁-C₁₈alkyl; C₄-C₁₈alkoxy; C₂-C₁₈alkyl which is interrupted by -O-; C₄-C₃₆alkoxy which is interrupted by -O-; C₇-C₉phenylalkyl; C₇-C₉phenylalkoxy; C₇-C₉phenylalkyl or C₇-C₉phenylalkoxy, each of which is substituted on the phenyl ring by 1 to 3 C₁-C₄alkyl radicals; C₅-C₉cycloalkyl; C₅-C₉cycloalkoxy; or phenoxy which is unsubstituted or substituted by 1 to 3 C₁-C₄alkyl radicals.

6. A polyether according to claim 5, in which
n is an integer in the range from 5 to 30; and
R¹ is C₁-C₁₈alkyl; C₄-C₁₈alkoxy; C₇-C₉phenylalkyl; or C₅-C₉cycloalkoxy.

7. A composition comprising (a) an organic material which is sensitive to damage by light, oxygen and/or heat, and (b), as stabilizer, a polyether of the formula I according to claim 1.

8. A composition according to claim 7, in which component (a) is an organic polymer.

9. A composition according to claim 7, in which component (a) is a polyolefin, a photographic material or a paint binder based on acrylic, alkyd, polyurethane, polyester or polyamide resin or corresponding modified resins.

10. A composition according to claim 7, in which a conventional additive is present in addition to components (a) and (b).

11. A composition according to claim 7, containing from 0.01 to 10 % by weight of component (b), based on the weight of the composition.

12. A process for the stabilization of organic polymers against damage by light, oxygen and/or heat, which comprises admixing, as stabilizer, a polyether of the formula I according to claim 1 with the polymers.

13. The use of a polyether of the formula I according to claim 1 for the stabilization of organic material against damage by light, oxygen and/or heat.

## Revendications

1. Polyéther de formule I 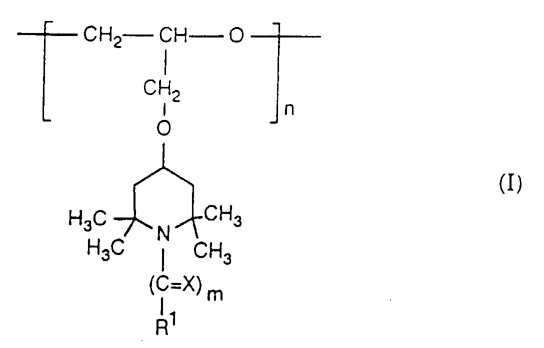 dans laquelle
m est 0 ou 1; n représente un nombre entier dans l'intervalle de 3 à 100; R¹, dans le cas où m est 0 ou 1, représente un groupe alkyle en C₁-C₃₆, ou aralkyle en C₇-C₃₆, qui est respectivement non substitué ou substitué par un groupe cycloalkyle en C₅-C₈, ou est interrompu dans la partie aliphatique par un groupe cycloalkylène en C₅-C₈ ou un atome d'oxygène ou de soufre ou -NR¹¹- ou est substitué dans la partie aromatique par 1 à 3 groupes alkyle en C₁-C₄ et/ou alcoxy en C₁-C₄; alcényle en C₃-C₃₆; cycloalkyle en C₅-C₁₂, qui est non substitué ou substitué par 1 à 4 des groupes alkyle en C₁-C₄ et/ou alcoxy en C₁-C₄; aryle en C₆-C₁₀, qui est non substitué ou substitué par 1 à 4 groupes alkyle en C₁-C₄ et/ou alcoxy en C₁-C₄; et
R¹, dans le cas où m est 0, comprend de plus un atome d'hydrogène; un groupe alcoxy en C₁-C₃₆ ou aralcoxy en C₇-C₃₆, qui est respectivement non substitué ou substitué par un groupe cycloalkyle en C₅-C₈, est interrompu dans la partie aliphatique par un groupe cycloalkylène en C₅-C₈ ou un atome d'oxygène ou de soufre ou -NR¹¹- ou est substitué dans la partie aromatique par 1 à 3 groupes alkyle en C₁-C₄ et/ou alcoxy en C₁-C₄; alcényloxy en C₃-C₃₆; cycloalcoxy en C₅-C₁₂, qui est non substitué ou substitué par 1 à 4 groupes alkyle en C₁-C₄ et/ou alcoxy en C₁-C₄; et aryloxy en C₆-C₁₀, qui est non substitué ou substitué par 1 à 4 groupes alkyle en C₁-C₄ et/ou alcoxy en C₁-C₄;
R¹¹ représente un groupe alkyle en C₁-C₁₈, cycloalkyle en C₅-C₈, phényle ou phénylalkyle en C₇-C₉; et
X représente un atome d'oxygène ou de soufre.

2. Polyéther selon la revendication 1, dans lequel m est 0.

3. Polyéther selon la revendication 1, dans lequel m représente un nombre entier dans l'intervalle de 4 à 50 :
R¹ dans le cas où m est 0 ou 1, représente un groupe alkyle en C₁-C₃₆; alkyle en C₂-C₃₆ interrompu par -O-; aralkyle en C₇-C₃₆; aralkyle en C₇-C₃₆ interrompu dans la partie aliphatique par -O- et/ou substitué dans la partie aromatique par 1 à 3 groupes alkyle en C₁-C₄ ou alcoxy en C₁-C₄; cycloalkyle en C₅-C₉, qui est non substitué ou substitué par 1 à 3 groupes alkyle en C₁-C₄ ou alcoxy en C₁-C₄; et
R¹ dans le cas où m est 0, recouvre en plus un groupe alcoxy en C₁-C₃₆; alcoxy en C₁-C₃₆ interrompu par -O-; aralcoxy en C₇-C₃₆; aralcoxy en C₇-C₃₆ interrompu dans la partie aliphatique par -O- et/ou substitué dans la partie aromatique par 1 à 3 groupes alkyle en C₁-C₄ ou alcoxy en C₁-C₄; cycloalcoxy en C₅-C₉, qui est non substitué ou substitué par 1 à 3 groupes alkyle en C₁-C₄ ou alcoxy en C₁-C₄; et phényloxy, qui est non substitué ou substitué par 1 à 3 groupes alkyle en C₁-C₄ ou alcoxy en C₁-C₄; et X représente un atome d'oxygène.

4. Polyéther selon la revendication 3, dans lequel m est 0 :
R¹ représente un groupe alkyle en C₁-C₁₈; alcoxy en C₄-C₃₆; alkyle en C₂-C₁₈ interrompu par -O-; alcoxy en C₄-C₃₆ interrompu par -O-; phénylalkyle en C₇-C₁₈; phénylalcoxy en C₇-C₁₈; phénylalkyle en C₇-C₁₈ ou phénylalcoxy en C₇-C₁₈ respectivement substitué sur le noyau phényle par 1 à 3 groupes alkyle en C₁-C₄; cycloalkyle en C₅-C₉; cycloalcoxy en C₅-C₉; phényle, qui est non substitué ou substitué par 1 à 3 groupes alkyle en C₁-C₄; phényloxy, qui est non substitué ou substitué par 1 à 3 groupes alkyle en C₁-C₄,

5. Polyéther selon la revendication 4, dans lequel m est 0;
R¹ représente un groupe alkyle en C₁-C₁₈; alcoxy en C₄-C₁₈; alkyle en C₂-C₁₈ interrompu par -O-; alcoxy en C₄-C₃₆ interrompu par -O-; phénylalkyle en C₇-C₉; phénylalcoxy en C₇-C₉; phénylalkyle en C₇-C₉ ou phénylalcoxy en C₇-C₉ respectivement substitué sur le noyau phényle par 1 à 3 groupes alkyle en C₁-C₄; cycloalkyle en C₅-C₉; cycloalcoxy en C₅-C₉; phényloxy, qui est non substitué ou substitué par 1 à 3 groupes alkyle en C₁-C₄.

6. Polyéther selon la revendication 5, dans lequel
n représente un nombre entier dans l'intervalle de 5 à 30; et
R¹ représente un groupe alkyle en C₁-C₁₈; alcoxy en C₄-C₁₈; phénylalkyle en C₇-C₉; ou cycloalcoxy en C₅-C₉.

7. Composition contenant (a) un matériau organique sensible vis à vis de l'endommagement par la lumière, l'oxygène et/ou la chaleur, en particulier un polymère organique, et (b) un polyéther de formule I selon la revendication 1 comme stabilisant.

8. Composition selon la revendication 7, dans laquelle le composant (a) est un polymère organique.

9. Composition selon la revendication 7, dans laquelle le composant (a) est une polyoléfine, un matériau photographique ou un liant de peinture à base de résine acrylique, alkyde, polyuréthanne, polyester ou polyamide ou de résines correspondantes modifiées

10. Composition selon la revendication 7, contenant en plus des composants (a) et (b) un additif conventionnel.

11. Composition selon la revendication 7 contenant 0,01 à 10% en poids du composant (b), par rapport au poids de la composition.

12. Procédé de stabilisation de polymères organiques contre la détérioration par la lumière, l'oxygène et/ou la chaleur, caractérisé en ce qu'on mélange aux polymères un polyéther de formule I selon la revendication 1 comme stabilisant.

13. Utilisation de polyéthers de formule I selon la revendication 1 pour stabiliser un matériau organique contre la détérioration par la lumière, l'oxygène et/ou la chaleur.
